# EUROPEAN PATENT APPLICATION

(11) **EP 3 967 930 A1**
(43) Date of publication of application: **16.03.2022**
(21) Application number: 21191056.7
(22) Date of filing: 12.08.2021
(51) Int. Cl.: F23R 3/60, F23R 3/50

(54) **COMBUSTOR ARRANGEMENT**

(30) Priority: 14.09.2020 GB 202014423
(71) Applicant: Rolls-Royce plc, London N1 9FX (GB)
(72) Inventor: Hucker, Paul, Derby, Derbyshire DE24 8BJ (GB); Harding, Stephen, Derby, Derbyshire DE24 8BJ (GB); Rallo, Giuseppe, Derby, Derbyshire DE24 8BJ (GB); Morgan, Iain, Derby, Derbyshire DE24 8BJ (GB)
(74) Representative: Rolls-Royce plc

(57) **Abstract**

A combustion chamber (16) comprising a plurality of circumferentially arranged cassette segments (58,60) coupled to a combustor head (43) at one end and a wall section (54) at the other end, each cassette segment (58,60) extending the full length of the combustion chamber, and wherein the combustor head (43) has an annular tongue structure on a mating surface, the tongue structure engages with a groove portion present in each of the cassettes so that when assembled the groove portions in the each of the plurality of cassette segments (58,60) forms a substantially continuous groove.

## Description

### Field of the Disclosure

The present disclosure relates to a combustion chamber for a gas turbine engine. In particular, it relates to the connection of combustion chamber segments within a gas turbine engine.

### Background of the Disclosure

Typically, each gas turbine engine combustion chamber wall comprises an outer wall and an inner wall. The outer wall is either constructed from a fabricated sheet metal wall or a forged and machined wall. The inner wall comprises a plurality of cast metal tiles which are connected onto the outer wall using threaded studs, washers and nuts. The cast metal tiles either comprise a plurality of pedestals, projections or ribs on their outer - cooler - surface to provide convection cooling to the tiles. Alternatively, the cast metal tiles are provided with a plurality of apertures which extend form their outer - cooler - surfaces to their inner - hotter - surface to provide effusion cooling of the tiles. In both arrangements the cooling air is supplied through apertures in the outer wall into a space between the outer wall and inner wall. Another option to provide cooling is to use a cassette combustor architecture. Here the cassette combustor is an assembly consisting of segmented liner panels - named cassettes - that are manufactured by additive layer manufacturing and fastened together to form a continuous ring, each of which perform a function of the combustor assembly.

The conventional rear mounted combustor has a hoop-continuous combustion liner welded to a head at the front and to a hoop continuous support arm at the rear. The combustion liner can then be welded to a hoop continuous turbine interface ring at the rear - for a front mounted combustor. The compressor must be constructed so that it is robust. This is because the combustor is subject to ultimate load cases that affect the engine, such as a compressor surge or a combustor flame out. These events can result in a buckling of the hoop. The hoop rings can be clad with cast tiles to protect the liner from the thermal load of the combustion flame. However, the mating face that links the cassette to the combustor head needs to be tightly controlled so that the two faces are the same radius. Consequently, more bolts are required to seal the interface.

During an engine surge, the pressure delta across the combustion walls increases momentarily. This pressure loads onto the combustion liners and the combustor head, which result in the combustor head experiencing a forward load. Consequently, the bolts are likely to fail, which makes this configuration difficult to resist surge loads. A similar effect occurs in the event of bird strikes as well.

Consequently, it is desired to have an improved construction to overcome the limitations of the prior art.

### Summary of the Disclosure

According to a first aspect of the disclosure there is provided a combustion chamber comprising a plurality of circumferentially arranged cassette segments coupled to a combustor head at one end and a wall section at the other end, each cassette segment extending the full length of the combustion chamber, and wherein the combustor head has an annular tongue structure on a mating surface, the tongue structure engages with a groove portion present in each of the cassettes so that when assembled the groove portions in the each of the plurality of cassette segments forms a substantially continuous groove.

This has the benefit that the combustor has a greater resistance to the loads applied to it during a flameout or a compressor surge.

The mating surface may be an axial mating surface. Thus, allowing for easier manufacture. The clearance between the tongue and groove portion along the circumferential length may be variable.

The combustor head may be provided with a hole, which aligns with a hole provided on an upper surface of the cassette segments for the insertion of a fastener. This allows the combustor head to be securely connected to the cassettes. The combustor head holes may be slotted allowing for thermal expansion of the combustion chamber. The fasteners may be aligned parallel with a centreline of the engine. The fastener may be aligned generally axially, but at an angle to a centreline of the engine. The combustor heads and the cassette segments may each have respective lugs through which a faster is inserted to connect the cassette segments and the combustor head. The lugs on the combustor head may be circumferentially spaced and align with a lug located at the centre of the cassette segments. The lugs on the combustor head may be circumferentially spaced and align with a lug located at the corners of the cassette segments. The lugs on a front edge of the cassette segment may be circumferentially aligned with the lugs on a rear edge of the cassette segment. The lugs may be discretely mounted on the combustor head and the cassette segments, so that they extend radially outwards the centre of the combustor. A single or double fastener may be used per lug.

A cowl may be provided to connect to the combustor head on an opposing side to the mating surface that connects with the cassette segments. The cowl may be provided with a plurality of scallops, or cut- backs, on both a radially outer axially extending flange and a radially inner axially extending flange. The cowl may be provided with holes, which are arranged to align with the holes provided in the combustor head and cassette segments. The cowl may be provided with an edge, so it radially sits outboard of the interface between the combustor head and Cassette segments. The cowl may be connected only to the combustor head via a separate lug to that connects the combustor head with the cassette segments.

According to a second aspect of the disclosure there is provided a gas turbine engine for an aircraft, the gas turbine engine comprising: an engine core comprising a turbine, a compressor, and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft, wherein: The turbine may be a first turbine, the compressor is a first compressor, and the core shaft may be a first core shaft; the engine core further comprises a second turbine, a second compressor, and a second core shaft connecting the second turbine to the second compressor; and the second turbine, second compressor, and second core shaft may be arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Utip. The work done by the fan blades 13 on the flow results in an enthalpy rise dH of the flow. A fan tip loading may be defined as dH/Utip², where dH is the enthalpy rise (for example the 1-D average enthalpy rise) across the fan and Utip is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest-pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160 kN, 170 kN, 180 kN, 190 kN, 200 kN, 250 kN, 300 kN, 350 kN, 400 kN, 450 kN, 500 kN, or 550 kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 degrees C (ambient pressure 101.3 kPa, temperature 30 degrees C), with the engine static.

In use, the temperature of the flow at the entry to the high-pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400 K, 1450 K, 1500 K, 1550 K, 1600 K or 1650 K. The TET at cruise may be in an inclusive range bounded by any two of the values in the previous sentence (i.e. the values may form upper or lower bounds). The maximum TET in use of the engine may be, for example, at least (or on the order of) any of the following: 1700 K, 1750 K, 1800 K, 1850 K, 1900 K, 1950 K or 2000 K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium-based metal or an aluminium based material (such as an aluminium-lithium alloy) or a steel-based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000 m to 12000 m, for example in the range of from 10400 m to 11600 m (around 38000 ft), for example in the range of from 10500 m to 11500 m, for example in the range of from 10600 m to 11400 m, for example in the range of from 10700 m (around 35000 ft) to 11300 m, for example in the range of from 10800 m to 11200 m, for example in the range of from 10900 m to 11100 m, for example on the order of 11000 m. The cruise conditions may correspond to standard atmospheric conditions at any given altitude in these ranges. Purely by way of example, the cruise conditions may correspond to: a forward Mach number of 0.8; a pressure of 23000 Pa; and a temperature of -55 degrees C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the figures

Embodiments will now be described by way of example only, with reference to the Figures, in which:
**Figure 1** is a sectional side view of a gas turbine engine;
**Figure 2** is a close-up sectional side view of an upstream portion of a gas turbine engine;
**Figure 3** is a partially cut-away view of a gearbox for a gas turbine engine;
**Figure 4** is an illustrative example showing an enlarged cross-sectional view of a combustion chamber comprising combustion chamber segments;
**Figure 5** is an illustrative example showing a perspective view of a combustion chamber comprising combustion chamber segments;
**Figure 6** is an illustrative example showing a further enlarged perspective view of a hot side of one of the combustion chamber segments shown in Figure 5;
**Figure 7** is an illustrative example showing a further enlarged perspective view of a cold side of one of the combustion chamber segments shown in Figure 5;
**Figure 8** is a further enlarged cross-sectional view through the portions of the edges of two adjacent combustion chamber segments shown in Figure 5;
**Figure 9** is a further enlarged cross-sectional view through the portions of the edges of two adjacent combustion chamber segments shown in Figure 5
**Figure 10** is a further enlarged cross-sectional view though the upstream end of the combustion chamber in a plane containing the axis of the combustion chamber shown in Figure 5;
**Figure 11** is a further enlarged cross-sectional view though the upstream end of the combustion chamber in a further plane containing the axis of the combustion chamber shown in Figure 5;
**Figure 12** is a further enlarged alternative cross-sectional view though the upstream end of the combustion chamber in a plane containing the axis of the combustion chamber shown in Figure 5;
**Figure 13** is a schematic of the removal of the cassette from the base plate using an additive layer manufacturing technique;

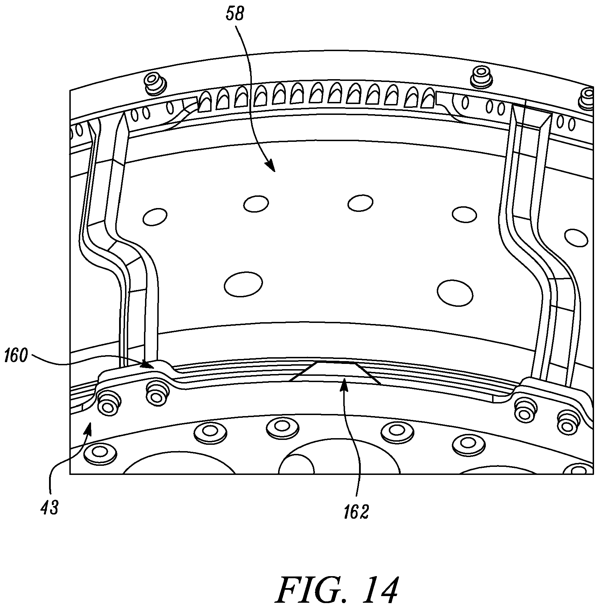

**Figure 14** is a perspective view of a combustion chamber comprising combustion chamber segments according to the present disclosure;

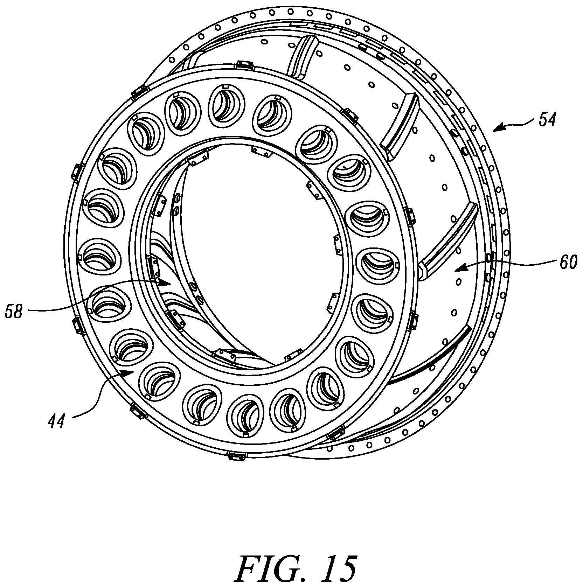

**Figure 15** is a perspective view of a combustion chamber comprising combustion chamber segments according to the present disclosure; and

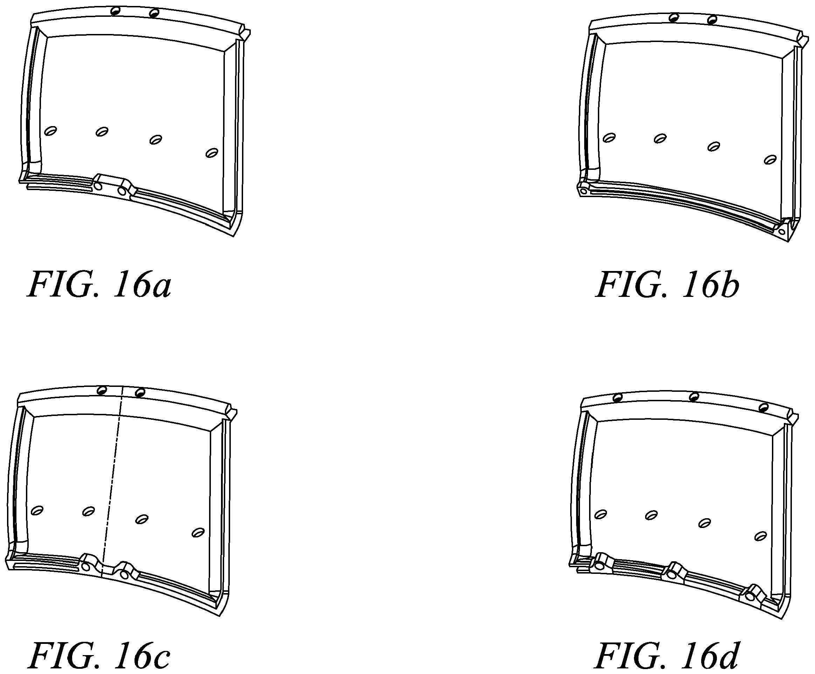

**Figure 16a****-d** present a illustrative example showing a further enlarged perspective view of a cassette featuring the location points of the connecting lugs.

### Detailed description of the Disclosure

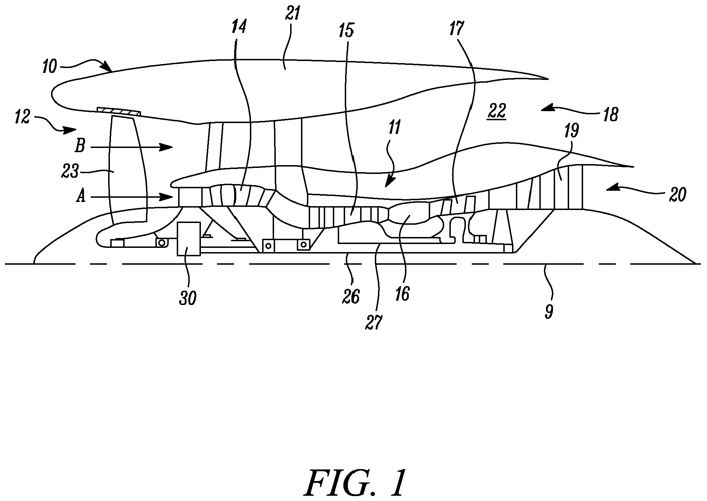

**Figure** 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low-pressure compressor 14, a high-pressure compressor 15, combustion equipment 16, a high-pressure turbine 17, a low-pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low-pressure turbine 19 via a shaft 26 and an epicyclic gearbox 30.

In use, the core airflow A is accelerated and compressed by the low-pressure compressor 14 and directed into the high-pressure compressor 15 where further compression takes place. The compressed air exhausted from the high-pressure compressor 15 is directed into the combustion equipment 16 where it is mixed with fuel and the mixture is combusted. The resultant hot combustion products then expand through, and thereby drive, the high pressure and low-pressure turbines 17, 19 before being exhausted through the nozzle 20 to provide some propulsive thrust. The high-pressure turbine 17 drives the high-pressure compressor 15 by a suitable interconnecting shaft 27. The fan 23 generally provides the majority of the propulsive thrust. The epicyclic gearbox 30 is a reduction gearbox.

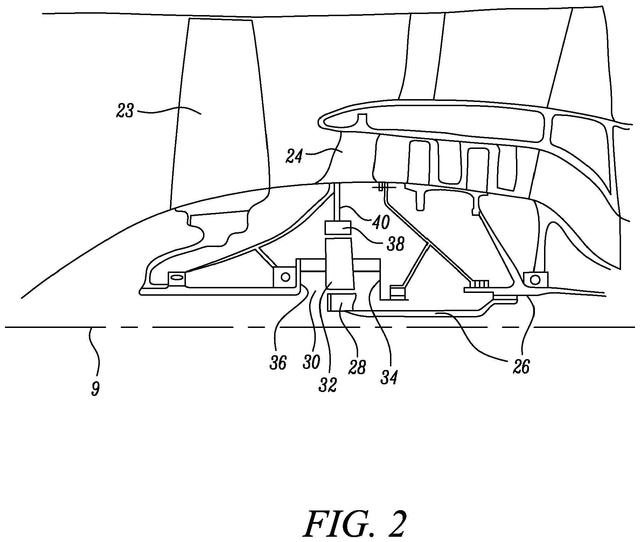

An exemplary arrangement for a geared fan gas turbine engine 10 is shown in **Figure 2****.** The low-pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low-pressure turbine" and "low-pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

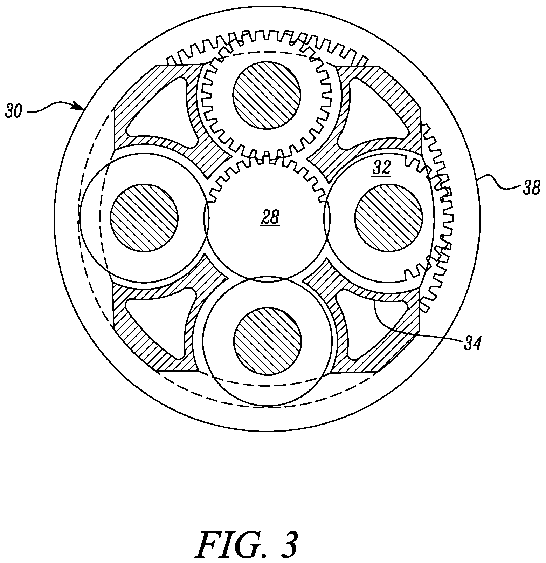

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

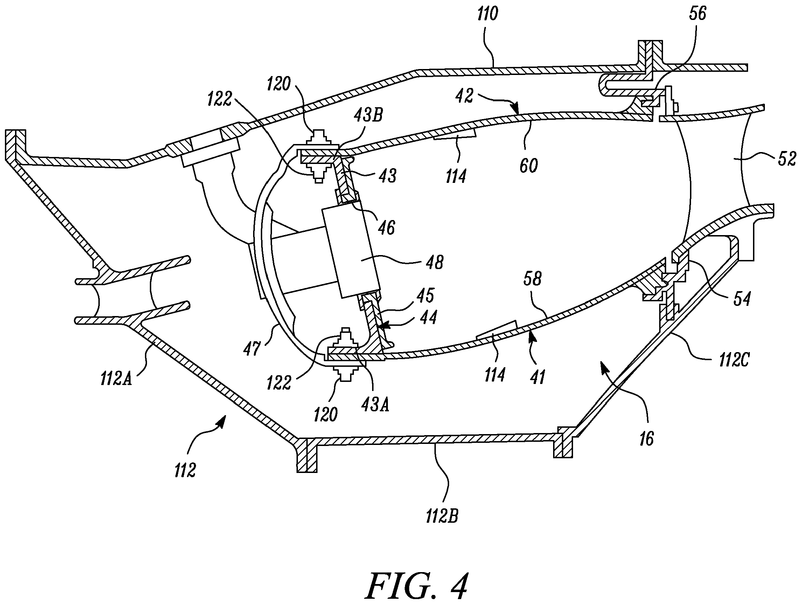

The combustion chamber 16, as shown more clearly in **Figure 4****,** is an annular combustion chamber and comprises a radially inner annular wall structure 41, a radially outer annular wall structure 42 and an upstream end wall structure 44. The upstream end of the radially inner annular wall structure 41 is secured to the upstream end wall structure 44 and the upstream end of the radially outer annular wall structure 42 is secured to the upstream end wall structure 44. The upstream end wall structure 44 comprises an upstream end wall 43, a heat shield 45 and a cowl 47. The heat shield 45 is positioned axially downstream of and secured to the upstream end wall 43 to protect the upstream end wall 43 from the combustion gases in the annular combustion chamber 16. The cowl 47 is positioned axially upstream of and secured to the upstream end wall 43. The combustion chamber 16 has a plurality of fuel injectors 48 and the fuel injectors 48 are arranged to supply fuel into the annular combustion chamber 16 during operation of the gas turbine engine 10. The upstream end wall 43 has a plurality of circumferentially spaced apertures 46 and each aperture 46 has a respective one of the plurality of fuel injectors 48 located therein. The heat shield 45 and the cowl 47 also each have a plurality of circumferentially spaced apertures and each aperture in the heat shield 45 and the cowl 47 is aligned with a corresponding aperture 46 in the upstream end wall 43. A plurality of circumferentially arranged compressor outlet guide vanes 39 are positioned axially upstream of the combustion chamber 16 and are arranged to direct the compressed air from the high-pressure compressor 15 into the annular combustion chamber 16. A plurality of circumferentially arranged turbine nozzle guide vanes 52 are positioned axially downstream of the combustion chamber 16 and are arranged to direct the hot gases from the annular combustion chamber 16 into the high-pressure turbine 17.

The annular combustion chamber 16 is positioned radially between a radially outer combustion chamber casing 110 and a radially inner combustion chamber casing 112. The radially inner combustion chamber casing 112 comprises a first, upstream, portion 112A, a second, intermediate, portion 112B and a third, downstream, portion 112C. The upstream end of the first portion 112A of the radially inner combustion chamber casing 112 is removably secured to the upstream end of the radially outer combustion chamber casing 110. In this example a flange at the upstream end of the first portion 112A of the radially inner combustion chamber casing 112 is removably secured to a flange at the upstream end of the radially outer combustion chamber casing 110 by suitable fasteners, e.g. nuts and bolts, passing through the flanges. The downstream end of the first portion 112A of the radially inner combustion chamber casing 112 is removably secured to the upstream end of the second portion 112B of the radially inner combustion chamber casing 112. In this example a flange at the upstream end of the second portion 112B of the radially inner combustion chamber casing 112 is removably secured to a flange at the downstream end of the first portion 112A of the radially inner combustion chamber casing 112 by suitable fasteners, e.g. nuts and bolts, passing through the flanges. The downstream end of the second portion 112B of the radially inner combustion chamber casing 112 is removably secured to the upstream end of the third portion 112C of the radially inner combustion chamber casing 112 and the downstream end of the third portion 112C of the radially inner combustion chamber casing 112 is removably secured to the radially inner ends of the turbine nozzle guide vanes 52. In this example a flange at the upstream end of the third portion 112C of the radially inner combustion chamber casing 112 is removably secured to a flange at the downstream end of the second portion 112B of the radially inner combustion chamber casing 112 by nuts and bolts passing through the flanges and flanges on the turbine nozzle guide vanes 52 are removably secured to a flange at the downstream end of the third portion 112C of the radially inner combustion chamber casing 112 by nuts and bolts passing through the flanges.

The first portion 112A of the radially inner combustion chamber casing 112 is generally frustoconical and extends radially inwardly and axially downstream from its upstream end to the radially outer ends of the compressor outlet guide vanes 39 and extends radially inwardly and axially downstream from the radially inner ends of the compressor outlet guide vanes 39 to its downstream end. The second portion 112B of the radially inner combustion chamber casing 112 is generally cylindrical. The third portion 112C of the radially inner combustion casing 112 is generally frustoconical and extends radially outwardly and axially downstream from its upstream end to the radially inner ends of the turbine nozzle guide vanes 52.

The upstream end wall 43 has an inner annular flange 43A extending in an axially downstream direction therefrom and an outer annular flange 43B extending in an axially downstream direction therefrom. The upstream end wall 43 forms a radially inner upstream ring structure and a radially outer upstream ring structure. A radially inner downstream ring structure 54 is mounted off the radially inner combustion chamber casing 112 and a radially outer downstream ring structure 56 is mounted off the radially outer combustion chamber casing 110. The radially inner annular wall structure 41 of the annular combustion chamber 16 and the radially outer annular wall structure 42 of the annular combustion chamber 16 comprise a plurality of circumferentially arranged combustion chamber segments 58 and 60 respectively. It is to be noted that the combustion chamber segments 58, 60 extend the full axial, longitudinal, length of the annular combustion chamber 16.

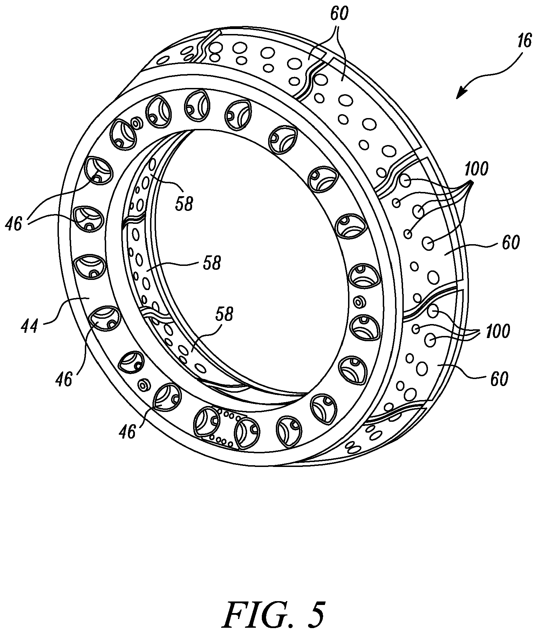

The circumferential arrangement of combustion chamber segments 58 and 60 of the radially inner and radially outer annular wall structures 41 and 42 of the annular combustion chamber 16 are clearly shown in **Figure 5****.** In this example there are ten combustion chamber segments 58 and ten combustion chamber segments 60 and each combustion chamber segment 58 and 60 extends through an angle of 36°. Other suitable numbers of combustion chamber segments 58 and 60 may be used, e.g. two, three, four, five, six, eight or twelve, and the number of combustion chamber segments 58 may be the same as or different to the number of combustion chamber segments 60. It is preferred that each of the combustion chamber segments extends through the same angle, but it may be possible to arrange the combustion chamber segments to extend through different angles.

The outer wall 66 of each combustion chamber segment 58, 60 has at least one dilution aperture 100, the inner wall 66 of each combustion chamber segment 58, 60 has at least one dilution aperture 102 aligned with the corresponding dilution aperture 100 in the outer wall 64. At least one dilution wall 104 extends from the periphery of the corresponding dilution aperture 100 in the outer wall 64 to the periphery of the corresponding dilution aperture 102 in the inner wall 66. The inner wall 66 of each combustion chamber segment 58, 60 has at least one dilution chute 106, the at least one dilution chute 106 extends from the inner wall 66 in a radial direction away from the inner wall 66 and the outer wall 66 and each dilution chute 106 can be aligned with a corresponding one of the dilution apertures 104 in the inner wall 66, as shown in Figures 4 to 7 . In this example there are a plurality of dilution apertures 100, corresponding dilution apertures 102, dilution walls 104 and dilution chutes 106.

If the combustion chamber is a lean burn combustion chamber the combustion chamber segments 58, 60 are not provided with dilution apertures, dilution walls and dilution chutes.

Each combustion chamber segment 58 and 60, as shown in Figures 5 to 8, comprises a box like structure 62 including an outer wall 64 and an inner wall 66 spaced from the outer wall 64. The outer wall 64 and the inner wall 66 are arcuate. Figures 5 to 8 show a combustion chamber segment 58 of the radially inner annular wall structure 41. The outer wall 64 has a plurality of apertures 69 for the supply of coolant into the box like structure 62 and the inner wall 66 has a plurality of apertures 67 for the supply of coolant out of the box like structure 62. A first edge 68 of the box like structure 62 has a first hook 70 extending from the outer wall 64 and away from the inner wall 66. The first hook 70 extends at least a portion of the axial, longitudinal, length of the box like structure 62 and the first hook 70 is arranged at a first radial distance from the outer wall 64. A second edge 72 of the box like structure 62 has a second hook 74 extending from the outer wall 64 and away from the inner wall 66. The second hook 74 extends at least a portion of the axial, longitudinal, length of the box like structure 62, the second hook 74 is arranged at a second radial distance from the outer wall 64 and the second radial distance is greater than the first radial distance. The first hook 70 of each combustion chamber segment 58, 60 engages the outer wall 64 at the second edge 72 of an adjacent combustion chamber segment 58, 60 and the second hook 74 of each combustion chamber segment 58, 60 engages the first hook 70 of an adjacent combustion chamber segment 58, 60 to form a seal and to distribute loads between the adjacent combustion chamber segments 58, 60 and to maintain a circular profile, shape, for the radially inner, or radially outer, annular wall structure 41 and 42 of the annular combustion chamber 15, e.g. to prevent dislocation of the combustion chamber segments 58, 60 and to provide a sealing function to control and minimise the leakage of air through the joint. Thus, the first hook 70 of each combustion chamber segment 58, 60 contacts, abuts, or is in close proximity to the surface of the outer wall 64 at the second edge 72 of the adjacent combustion chamber segment 58, 60 and the second hook 74 of each combustion chamber segment 58, 60 contacts, abuts, or is in close proximity to the surface of the first hook 70 at the first edge 68 of the adjacent combustion chamber segment 58, 60. The first hook 70 of each combustion chamber segment 60 is arranged radially outwardly of the outer wall 64 at the second edge 72 of the adjacent combustion chamber segment 60 and the second hook 74 of each combustion chamber 60 is arranged radially outwardly of the first hook 70 at the first edge 68 of the adjacent combustion chamber segment 60. Similarly, the first hook 70 of each combustion chamber segment 58 is arranged radially inwardly of the outer wall 64 at the second edge 72 of the adjacent combustion chamber segment 58 and the second hook 74 of each combustion chamber 58 is arranged radially inwardly of the first hook 70 at the first edge 68 of the adjacent combustion chamber segment 58. The first hook 70 is integral with the first edge 68 of the box like structure 62 and the second hook 74 is integral with the second edge 72 of the box like structure 62. The angle of the joint between adjacent cassettes may be axial or scarfed at an angle relative to the engine axis to permit the flow of coolant across the joint broadly in the axial direction.

The upstream end of each combustion chamber segment 58, 60 is secured to the upstream ring structure and the downstream end of each combustion chamber segment is mounted on the downstream ring structure. Thus, the upstream end of each combustion chamber segment 58 is secured to the upstream ring structure, e.g. the upstream end wall structure, 44 and the downstream end of each combustion chamber segment 58 is mounted on the radially inner downstream ring structure, e.g. the radially inner discharge nozzle, 54. Similarly, the upstream end of each combustion chamber segment 60 is secured to the upstream ring structure, e.g. the upstream end wall structure, 44 and the downstream end of each combustion chamber segment 60 is mounted on the radially outer downstream ring structure, e.g. the radially outer discharge nozzle, 56.

The first hook 70 extends the length of the box like structure 62 between a securing arrangement and a mounting arrangement and the second hook 74 also extends the length of the box like structure 62 between the securing arrangement and the mounting arrangement. The securing arrangement and the mounting arrangement are discussed further below.

However, it may be possible for the first hook to extend the full length of the box like structure and for the second hook to extend the full length of the box like structure. Alternatively, it may be possible for the first hook to extend only a part of the full length of the box like structure and for the second hook to extend only a part of the full length of the box like structure. Additionally, it may be possible for there to be a plurality of first hooks arranged along the length of the box like structure and for there to be a number of second hooks arranged along the length of the box like structure.

The box like structure 62 of each combustion chamber segment 58, 60 has a first end wall 76 extending from a first, upstream, end of the outer wall 64 to a first, upstream, end of the inner wall 66, a second end wall 78 extending from a second, downstream and opposite, end of the outer wall 64 to a second, downstream and opposite, end of the inner wall 66. A first edge wall 80 extending from a first circumferential edge of the outer wall 64 to a first circumferential edge of the inner wall 66, a second edge wall 82 extending from a second, opposite circumferential, edge of the outer wall 64 to a second, opposite circumferential, edge of the inner wall 66 to form the box like structure 62.

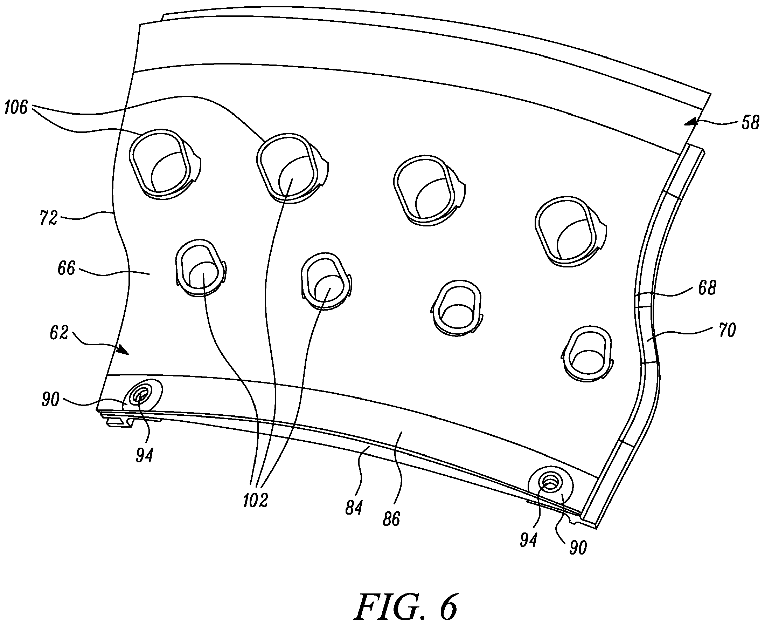

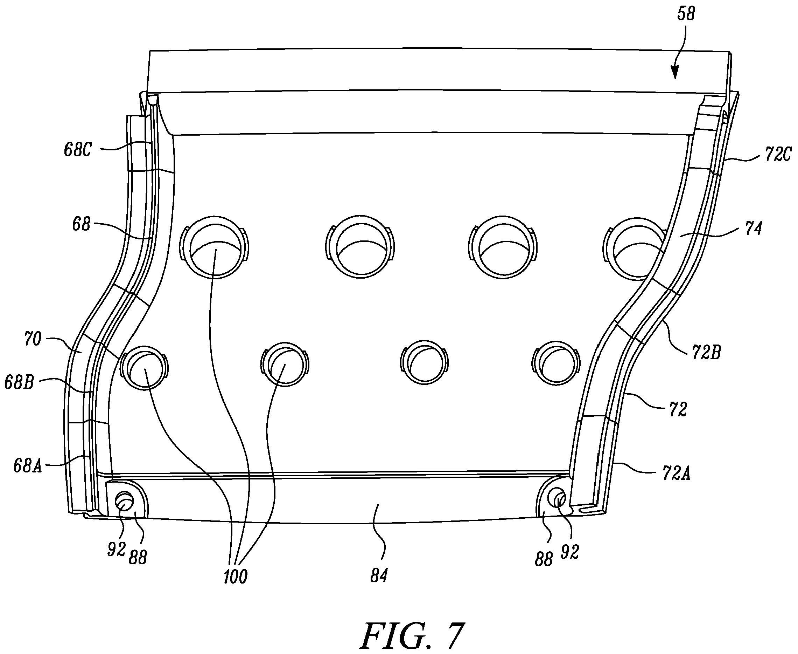

The first and second edges 68 and 72 of the combustion chamber segments 58, 60 are axially profiled so that the at least some of the apertures 67 in the inner wall 66 direct coolant over at least a portion of one of the edges 68 and 72 of the combustion chamber segment 58, 60, as shown in Figures 6 to 8. In this particular example first and second edges 68 and 72 of each combustion chamber segment 58, 60 has a first portion 68A, 72A extending with a purely axial component, a second portion 68B, 72B extending with axial and circumferential components and a third portion 68C, 72C extending with a purely axial component. Thus, the first and second edges 68 and 72 of each combustion chamber segment 58, 60 are profiled so that the at least some of the apertures 67A in the inner wall 66 near the first edge 68 direct coolant over at least a portion of the second edge 70 of an adjacent combustion chamber segment 58, 60. In particular the apertures 67A in the inner wall 66 near the first edge 68 in the first and second portions 68A and 68B of each combustion chamber segment 58, 60 direct coolant in a generally axially downstream direction across the gap between the first edge 68 of the combustion chamber segment 58, 60 and the second edge 72 of the adjacent combustion chamber segment 58, 60 and then over the second and third portions 72B and 72C of the adjacent combustion chamber segment 58, 60, as shown in **Figure 7** .

Alternatively, the first and second edges 68, 72 of the combustion chamber segments 58, 60 may extend with axial and circumferential components, as shown in **Figure 6****,** and in this example the first and second edges 68 and 72 of the combustion chamber segments 58, 60 may be arranged at an angle of up to 60° to upstream end of the combustion chamber segments 58, 60. In this example the apertures 67B in the inner wall 66 near the first edge 68 of each combustion chamber segment 58, 60 direct coolant in a generally axially downstream direction across the gap between the first edge 68 of the combustion chamber segment 58, 60 and the second edge 72 of the adjacent combustion chamber segment 58, 60 and then over the second edge 72 of the adjacent combustion chamber segment 58, 60.

The box like structure 62 of each combustion chamber segment 58, 60 comprises a frame. The frame comprises the first and second end walls 76 and 78 and the first and second edge walls 80. The first and second end walls 76 and 78 and the first and second edge walls 80 are integral, e.g. one piece. The frame of each combustion chamber segment 58, 60 is radially thicker, and stiffer, than the outer wall 64 and the inner wall 66 and the first and second end walls 76 and 78 and the first and second edge walls 80 are thicker axially and thicker circumferentially respectively than the radial thickness of the outer and inner walls 64 and 66 in order to carry loads and interface with adjacent combustion chamber segments 58, 60 and the upstream ring structure and the downstream ring structure. The frame of each combustion chamber segment 58, 60 is arranged to carry the structural loads, the thermal loads, surge loads and flameout loads. The first hook 70 is provided on the first edge wall 80 and the second hook 74 is provided on the second edge wall. In other words, the box like structure 62 of each combustion chamber segment 58, 60 comprises the frame and portions of the outer and inner walls 64 and 66 extending axially, longitudinally, between the first and second end walls 76 and 78 and extending circumferentially, laterally, between the first and second edge walls 80.

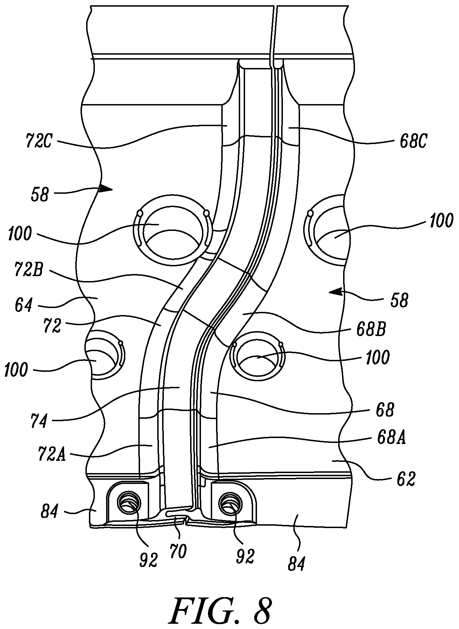

The first and second edge walls 80 and 82 of the combustion chamber segments 58, 60 are arranged at a non-perpendicular angle to the outer wall 64 and/or the inner wall 66, as shown in Figures 7 and 8. The first and second edge walls 80 in particular are arranged at an angle in the range of 70° to 90° to the outer wall 64 and/or the inner wall 66. More preferably the first and second edge walls 80 and 82 are arranged at an angle of 70° to 85° or more preferably 75° to 85° to the outer wall 64 and/or the inner wall 66. In this particular example the first and second edge walls 80 are arranged at an angle of 80° to the outer wall 64 and/or the inner wall 66, see in particular Figures 7 and 8.

The first, upstream, end of the outer wall 64 of each combustion chamber segment 58, 60 has a flange 84 and the flange 84 has at least one locally thicker region 88, each locally thicker region 88 of the outer wall 64 has an aperture 92 extending there-through. The first, upstream, end of the inner wall 66 has a flange 86 and the flange 86 has at least one locally thicker region 90, each locally thicker region 90 of the inner wall 66 has an aperture 94 extending there-through. The at least one locally thicker region 88 at the first end of the outer wall 64 is arranged such that the aperture 92 is aligned with the aperture 94 through the corresponding locally thicker region 90 of the inner wall 66 and an annular slot 95 is formed between the flange 84 of the first end of the inner wall 66 and the flange 86 of the first end of the outer wall 66. The flange 84 at the first end of the outer wall 64 and the flange 86 at the first end of the inner wall 66 of each combustion chamber segment 58, 60 have a plurality of locally thickened regions 88, 90 respectively and the locally thicker regions 88, 90 are spaced apart circumferentially, laterally, between the first and second edges 68, 70 of the outer and inner walls 64 and 66 of the combustion chamber segments 58, 60. The aperture 94 in the at least one, or each, locally thickened region 90 of the inner wall 66 of each combustion chamber segment 58, 60 is threaded.

Each combustion chamber segment 58, 60 is secured to the upstream end wall structure 44 by one or more bolts 96. Each combustion chamber segment 58 is positioned such that the inner annular flange 44A of the upstream end wall structure 44 is located radially between the flanges 84 and 86 at the upstream end of the combustion segment 58 and such that the apertures 92 and 94 in the flanges 84 and 86 are aligned with a corresponding one of a plurality of circumferentially spaced apertures 45A in the flange 44A of the upstream end wall structure 44. Bolts 96 are inserted through the aligned apertures 92 and 45A and threaded into the apertures 94 to secure the combustion chamber segment 58 to the upstream end wall structure 44. Similarly, each combustion chamber segment 60 is positioned such that the inner annular flange 44B of the upstream end wall structure 44 is located radially between the flanges 84 and 86 at the upstream end of the combustion segment 60 and such that the apertures 92 and 94 in the flanges 84 and 86 are aligned with a corresponding one of a plurality of circumferentially spaced apertures 45B in the flange 44B of the upstream end wall structure 44. Bolts 96 are inserted through the aligned apertures 92 and 45A and threaded into the apertures 94 to secure the combustion chamber segment 60 to the upstream end wall structure 44. Alternatively, rivets may be inserted through the aligned apertures 92 and 45A and the apertures 94 to secure the combustion chamber segment 60 to the upstream end wall structure 44.

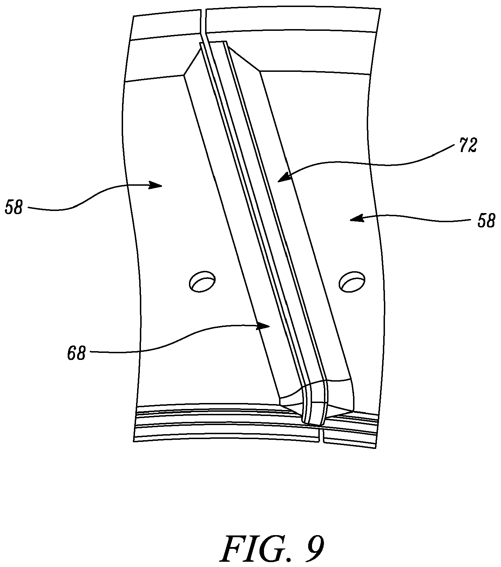

Figures 9, 10 and 11 show the upstream end wall 43 and the upstream ends of the combustion chamber segments 60. As mentioned previously the upstream end of each combustion chamber segment 58, 60 is secured, e.g. removably secured, to the upstream ring structure 44. Thus, the upstream end of each combustion chamber segment 58 is secured to the upstream ring structure, e.g. to the upstream end wall 44 and the upstream end of each combustion chamber segment 60 is secured to the upstream ring structure, e.g. to the upstream end wall 44.

**Figure** 9 presents a means of connecting the cassette to the combustor head or meterpanel 44. The cassettes 58, 60 and the head are provided with an axial mating face. This mating face may be perpendicular to the engine centre line, as shown in Figure 9. The combustor head generally has a conical face. However, it may also be flat or curved. This is the result of the cant angle of the combustor. In this case the combustor head has to align with the compressor outlet guide vane and the turbine nozzle guide vane as well as the two vanes have different diameters. The axial mating face of this disclosure is better able to resist the forces associated with bird strikes and flameout axial loading of the combustor head. It also reduces the number of tolerances from the tolerance stack that controls the fuel spray nozzle. This may lead to an improvement in emission control.

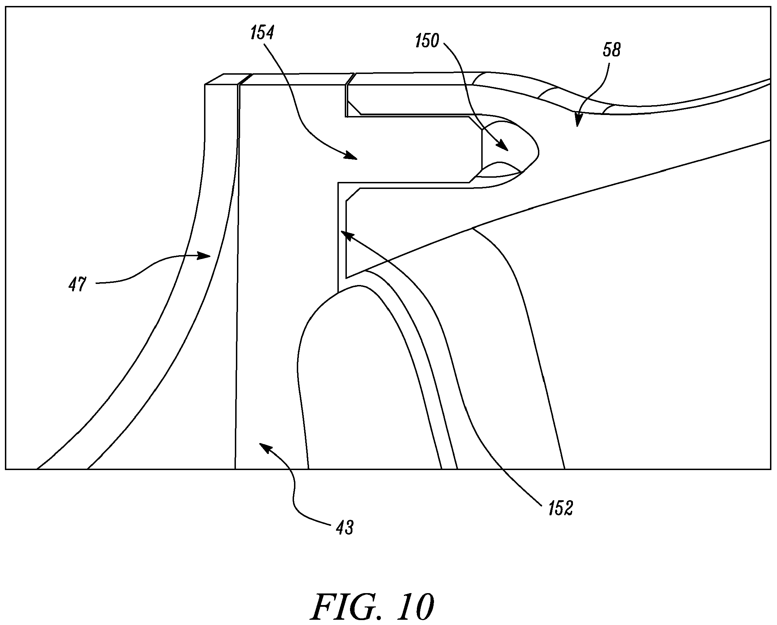

The cassettes 58 and 60 are provided with a slot/groove 150 for engagement shaped with the mating surface 152. The slot in the cassette is designed to fit a corresponding tongue 154 which is shaped in the combustor head. Abutting the rear of the combustor head may be a cowl. The cowl and the combustor head are provided with a hole. This hole corresponds with a tapped hole that is provided in an upper surface of the cassette, such that a bolt 156 can be inserted, as shown in **Figure 10****.** In this example upstream end of each combustion chamber segment cassettes 58 and 60 has two projecting lugs 160, which can be arranged anywhere along the front edge of the cassette and each lug 160 either has a single or double bolt hole 158. The bolt holes 158 are arranged adjacent to the upstream ends of the first and second edge walls adjacent the first and second hooks. The cassette may be tapped, or alternatively a tapped insert may be inserted into a hole in the cassette. Alternatively, the hole may be a through hole in which a nut is used downstream to secure the bolt and to fasten the cowl, combustor head and the cassette together. A washer may be used with each bolt 156 located in bolt holes 158. The insertion of this bolt fastens together the combustor head, the cowl and the cassette. The fasteners may be aligned axially (parallel) with the engine centre line. Having the fasteners aligned parallel with the engine centreline puts the hole in a better orientation for surface finish and repeatability. Alternatively, the fasteners may be aligned generally axially, but with the angle to the engine centreline. This angling of the fasteners reduces the Pitch circle Diameter (PCD). The fasteners may be angled closer to the cant angle of the combustor. The disadvantage of this is that angling the holes results in a more expensive manufacturing method. The advantage of angling the fasteners with the cant angle of the combustor is the reduced PCD, which reduces the disruption to the annulus air flow around the combustor and along the cassette walls. The cassettes may be provided with between 2 to 4 lugs per cassette, with each lug having between 1 and 2 fasteners. Alternatively, to using fasteners, the cassette and the combustor head may be joined by brazing.

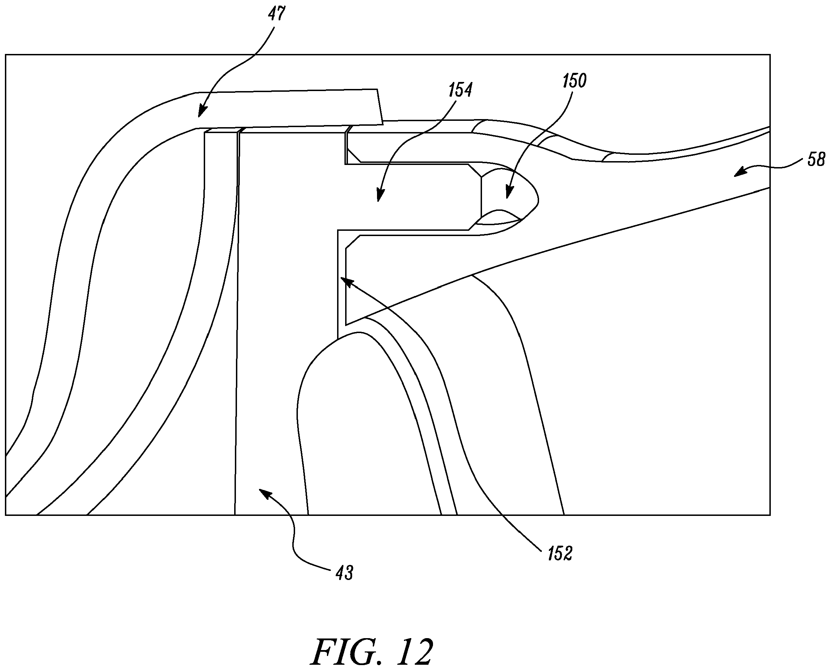

The tongue in the hoop may be machined into a continuous tongue. For example, the tongue may be turned, and if it is a broken tongue these further sections can be machined out. The combustor head may be made from a machined forging, or a semi-machined casting. The tongue may be machined on a casting. A continuous hoop may be used as it is able to form an unbroken connection with the cassette. The hoop is connected the grooves in the cassette. The cassette sections each have a slot machined into them. The slot in the cassettes when they are all assembled therefore forms a continuous slot into which the continuous tongue on the combustor head fits. Alternatively, the hoop section may be noncontinuous and can be arranged either to fit in a continuous groove or a non-continuous groove in which the cut outs are aligned with the portions of the non-continuous tongue. The downstream end of the groove may be overhanging during the manufacturing of the cassettes. It may have an arch geometry to allow it to be manufactured. The tongue or groove maybe configured to be parallel or tapered relative to a central axis. Alternatively, they tongue and/or groove may be dovetailed, involute, or have a compressible/crushable sealing feature integrated. The cassette may be manufactured using additive layer manufacture (ALM) as shown in **Figure 12****.** For example, 'Laser Beam Powder Bed Fusion', Electron beam powder bed fusion', binder jetting' or 'nanoparticle jetting' ALM techniques may be employed. In such a case the groove may be printed as part of the cassette. The hole and the thread may also be printed as part of the manufacturing of the cassette. Alternatively, the cassettes may be cast. In both cases the groove and holes in the cassettes may be machined out. The tongue on the combustor head and the groove in the cassette serve three functions. Firstly, it is able to hold the cassettes concentric to the combustor head. As the outer cassettes are thermally loaded, they will naturally flatten, whilst the inner cassette wants to petal - that is to decrease the radius of curvature. Holding the cassettes around the hoop of the combustor head will increase the stresses in the tongue and groove as the clearances change along the circumferential length along the circumferential length due to the changed shape of the cassettes. To counter this, the clearance between the tongue and groove along the circumferential length may vary. For example, this clearance may vary by a maximum of 2 mm between the smallest and largest clearances of the cassette. This will allow the cassette to distort freely up to a limit, which in turn reduces the stresses. The second benefit is that it is able to resist the load on the cassette during combustor flameout and compressor surge. During a combustor flameout the pressure loading into the combustor acts radially inwards, whilst during a combustor surge the pressure loading on the on the combustor acts radially outwards. Thus, having a tongue on the hoop and a groove within the cassettes allows the load to be resisted along the whole length of the tongue and groove rather than at the point of discrete fasteners. The fasteners in this case will further contribute to resist the load from a surge or flameout. The tongue and groove configurations allows for a much smaller number of fasteners are needed. This reduces the area of blockage in the combustion annulus and reduces the weight of the component and the cost. The third function of the tongue and groove is to act as a sealing feature between the cassette and the combustor head. As the cassettes are thermally loaded they will change shape reducing the amount of leakage from the combustor. This was an issue in the prior art, where the leakage could only be prevented by the insertion of further fasteners, which increased the weight and complexity of the head and the cassette. A high temperature gasket seal may also be applied to the cassette to further minimise leakage.

The presence of an axial mating face simplifies the manufacture of the cassette. The axial mating face may be produced by a wire electro discharge machine process to remove the cassette component from the build plate as shown in figure 12. In this case the cassette is manufactured by an ALM process. The cassette may be built up in a direction perpendicular and away from the surface of the build plate. Alternatively, it may be built at any suitable angle, however, this will require further machining of the cassette. Using such a method allows for the height of the cut off from the build plate to be determined. This allows for a greater degree of control and accuracy of the build of the cassette structures. This has the further advantage of reducing the axial tolerance stack and therefore fuel spray nozzle penetration into the combustor.

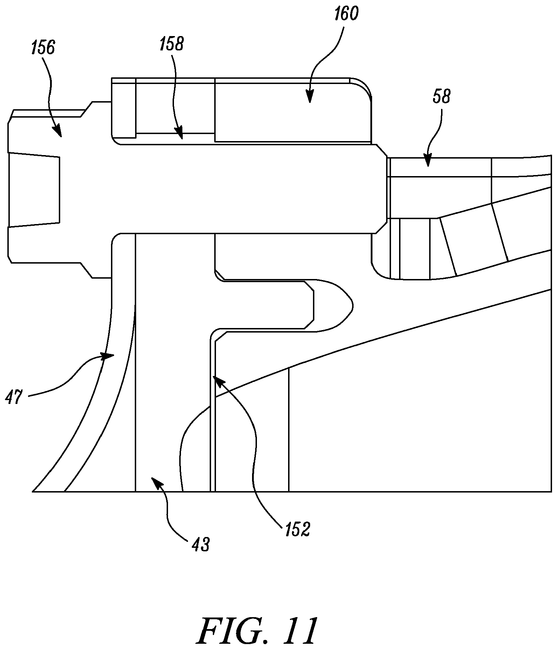

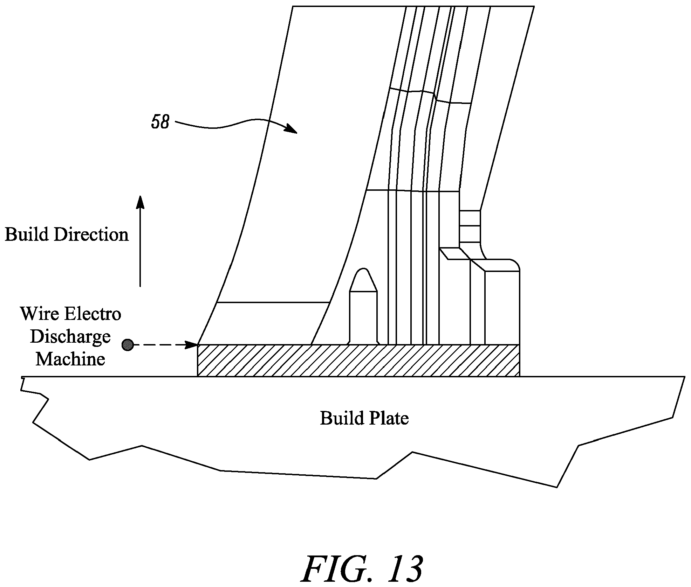

Where the fasteners are positioned, they may be formed as part of a lug 160, which corresponds to a raised section of the combustor head. This is shown in **figure 13****.** The lugs may be positioned at any point around the circumference. However, they may be positioned behind any other upstream features. This would reduce the blocking of the combustion of the annulus flow. The lugs may be circumferentially aligned with the joints between the cassettes. This results in a reduction in the axial load being transferred through the cooling structure. One or more of the holes in the combustor head may be circumferentially slotted to allow for thermal growth of the cassette relative to the combustor head. This is because the combustor head is typically cooler than the cassettes. Having this configuration and a variable tongue and groove clearance the fasteners will have some radial shear induced by the cassette shape change due to the thermal loading. Alternatively, the fastener lugs could be positioned in the circumferential middle of the cassette. This would mean that the thermal growth of the cassette no longer influences the additional load onto the fasteners. However, it has the disadvantage that increased axial loads are transmitted through the cooling structure. The Cowl may also be integral to the Combustor Head and therefore it does not require being bolted through the lug or a separate lug. The cowl may be a separate component as described above that fastens to the combustor at the lug points that engage with the cassettes as shown in **figure** 11. Alternatively, the cowl to the combustor head may be connected via a separate lug that does not connect with the cassettes. In such a case the cowl is shown with an axial mating surface to the upstream face of the combustor head. This latter configuration has lower unit cost due to the lower complexity allowing for pressed sheet metal manufacture. A disadvantage of this is leakage of outlet guide vane air which is directed by the upstream face of the combustor head deflecting and flowing outward radially into the annulus, which disrupts the annulus flow. This disadvantage may be overcome by shaping the cowl so that it sits outboard of the combustor head and the cassette interface. This can be used in situations in which the cowl is attached only to the combustor head and to those in which the cowl is connected to the combustor head and the cassettes. Three bolt holes 158 in the cowl 47 are cylindrical and have the same diameter as the bolt holes 158 and the remaining bolt holes 158 are circumferentially slotted to allow for manufacturing tolerances and to allow relative thermal expansion and contraction. It is to be noted that the cowl 47 may be provided with a plurality of scallops, or cut- backs, 162 on both its radially outer axially extending flange and its radially inner axially extending flange, as shown in figure 13. Each scallop, cut back, 162 is located at an interface between adjacent combustion chamber segments 58 or at an interface between adjacent combustion chamber segments 60. Each scallop 162 comprises a region where the downstream end of the cowl 47 is locally positioned axially upstream of the remainder of the downstream end of the cowl 47. These arrangements allow the cowl 47 to be removed without disassembling the combustion chamber segments 58, 60 from the upstream end wall 44 and enable in-service replacement and or repair of upstream end wall accessories, e.g. heat shield segments 45, fuel injector seals etc. The nuts 134 may be captive nuts for example nuts riveted to the flanges of the upstream end wall 44.

It is to be noted that the radially outer downstream ring structure 56 is a separate structure to the upstream end wall 44 and the radially inner downstream ring structure 54 is a separate structure to the upstream end wall, upstream ring structure.

A further benefit is that the combustion chamber loads are transmitted into the frame structure of the combustion chamber segments and not into the inner wall and/or outer wall of the combustion chamber segments. Load transmission from the frame of the cassette maybe augmented by stiffening the cassette panel or adding features such as ribs to the cold side.

An additional benefit is that the combustion chamber segments are removably secured to the corresponding downstream ring structure which allows the combustion chamber segments to be repaired or replaced. Thus, the combustion chamber segments may have a shorter working life than the corresponding downstream ring structure.

An advantage of the present disclosure is that the fasteners at the upstream ends of the combustion chamber segments radially and axially restrain the combustion chamber segments relative to the upstream end wall of the combustion chamber during normal operation and also during ultimate load situations, e.g. during compressor surge or combustion chamber flame out, when relatively high radial loads are exerted onto the combustion chamber segments tending to force the combustion chamber segments of the radially outer annular wall of the annular combustion chamber radially outwardly and to force the combustion chamber segments of the radially inner annular wall of the annular combustion chamber radially inwardly.

A further benefit is that the fasteners at the upstream ends of the combustion chamber segments allow the combustion chamber segments to be removed from the upstream end wall of the combustion chamber and replaced if the combustion chamber segments are damaged or to be repaired and reinserted into the combustion chamber.

Another benefit of the fastener arrangement is that there are low stresses in the portions of the combustion chamber segments which have cooling arrangements. Furthermore, the combination of radial and axial bolts allows accommodation of the different cassette lengths as determined by their build tolerances.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

**Feature table**

| | | | |
|---|---|---|---|
| 10 | Gas turbine engine | 62 | box like structure |
| 11 | core | 64 | outer wall |
| 12 | air intake | 66 | inner wall |
| 14 | low pressure compressor | 67 | apertures |
| 15 | Combustion chamber | 68 | first edge |
| 17 | high pressure turbine | 69 | apertures |
| 18 | exhaust nozzle | 70 | first hook |
| 19 | low pressure turbine | 72 | second edge |
| 20 | nozzle | 74 | second hook |
| 21 | nacelle | 75 | frame |
| 22 | bypass duct | 76 | second end walls |
| 23 | fan | 78 | second end walls |
| 24 | stationary structure | 80 | first edge wall |
| 26 | first core shaft | 82 | second edge walls |
| 27 | second core shaft | 84 | flanges |
| 28 | sun gear | 86 | flanges |
| 30 | epicyclic gearbox | 88 | locally thicker region |
| 32 | planet gears | 90 | locally thicker region |
| 34 | planet carrier | 92 | aperture |
| 36 | linkages | 94 | aperture |
| 38 | ring gear | 95 | annular slot |
| 39 | outlet guide vanes | 96 | blots |
| 40 | linkages | 100 | dilution aperture |
| 41 | inner annular wall structure | 102 | dilution aperture |
| 42 | outer annular wall structure | 104 | dilution wall |
| 43 | upstream end wall | 106 | dilution chute |
| 44 | upstream end wall | 110 | chamber casing |
| 45 | heat shield | 112 | chamber casing |
| 46 | aperture | 134 | nuts |
| 47 | cowl | 150 | slot/groove |
| 48 | fuel injectors | 152 | mating surface |
| 52 | nozzle guide vanes | 154 | tongue |
| 54 | downstream ring structure | 156 | bolt |
| 56 | outer downstream ring structure | 158 | bolt hole |
| 58 | combustion chamber segments | 160 | projecting lugs |
| 60 | combustion chamber segments | 162 | cut backs |

## Claims

1. A combustion chamber comprising a plurality of circumferentially arranged cassette segments coupled to a combustor head at one end and a wall section at the other end, each cassette segment extending the full length of the combustion chamber,
wherein the combustor head has an annular tongue structure on a mating surface, and the tongue structure engages with a groove portion present in each of the cassettes so that when assembled the groove portions in the each of the plurality of cassette segments forms a substantially continuous groove.

2. The combustion chamber as claimed in Claim 1, wherein the clearance between the tongue and groove portion along the circumferential length is variable.

3. The combustion chamber as claimed in Claim 1 or Claim 2, wherein the combustor head is provided with a hole, which aligns with a hole provided on an upper surface of the cassette segments for the insertion of a fastener.

4. The combustion chamber as claimed in Claim 3, wherein the holes on the combustor head are slots allowing for thermal expansion of the combustion chamber.

5. The combustion chamber as claimed in Claim 3 or Claim 4, wherein the fastener is aligned parallel with a centreline of the engine.

6. The combustion chamber as claimed in Claim 3 or Claim 4, wherein the fastener is aligned generally axially, but at an angle to a centreline of the engine.

7. The combustion chamber as claimed in any one of Claims 1 to 6, wherein the combustor heads and the cassette segments each have respective lugs through which a faster is inserted to connect the cassette segments and the combustor head.

8. The combustion chamber as claimed in Claim 7, wherein the lugs on the combustor head are circumferentially spaced and align with a lug located at the centre of the cassette segments.

9. The combustion chamber as claimed in Claim 7, wherein the lugs on the combustor head are circumferentially spaced and align with a lug located at the corners of the cassette segments.

10. The combustion chamber as claimed in Claim 8 or Claim 9, wherein the lugs on a front edge of the cassette segment are circumferentially aligned with the lugs on a rear edge of the cassette segment.

11. The combustion chamber as claimed in any one of Claims 7 to 10 wherein the lugs are discretely mounted on the combustor head and the cassette segments, so that they extend radially outwards the centre of the combustor.

12. The combustion chamber as claimed in any one of Claims 1 to 11, wherein a cowl is provided to connect to the combustor head on an opposing side to the mating surface that connects with the cassette segments.

13. The combustion chamber as claimed in Claim 12, wherein the cowl is provided with a plurality of scallops, or cut-backs, on both a radially outer axially extending flange and a radially inner axially extending flange.

14. The combustion chamber as claimed in Claim 12 or Claim 13, wherein the cowl is provided with holes, which are arranged to align with the holes provided in the combustor head and cassette segments.

15. A gas turbine engine (10) for an aircraft, the gas turbine engine comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft, wherein:
the gas turbine engine has a combustion chamber according to any one of Claims 1 to 14.
